# EUROPEAN PATENT SPECIFICATION

(11) **EP 2 696 959 B1**
(45) Date of publication and mention of the grant of the patent: **26.07.2017**
(21) Application number: 12715834.3
(22) Date of filing: 05.04.2012
(51) Int. Cl.: B01D 53/62, C04B 22/10

(54) **ENVIRONMENT FRIENDLY METHOD FOR THE PRODUCTION OF CEMENT**
UMWELTFREUNDLICHES VERFAHREN ZUR HERSTELLUNG VON ZEMENT
MÉTHODE ÉCOLOGIQUE DE PRODUCTION DE CIMENT

(30) Priority: 13.04.2011 EP 11002729
(43) Date of publication of application: 19.02.2014
(73) Proprietor: Brück, Bartholomäus T., 51065 Köln (DE); Bohnen, Michael F., 24576 Bad Bramstedt (DE); Sood, Rajeev, Blackheath, SE 3 7DH (GB)
(72) Inventor: Brück, Bartholomäus T., 51065 Köln (DE); Bohnen, Michael F., 24576 Bad Bramstedt (DE); Sood, Rajeev, Blackheath, SE 3 7DH (GB)
(86) International application number: PCT/EP2012/001536
(87) International publication number: WO 2012/139743

(56) References cited:
- WO-A1-2010/104989
- DE-A1- 1 903 347
- KR-A- 20000 067 238
- KR-B1- 100 673 533
- US-A- 3 046 240
- US-A- 3 960 582
- Ah-Hyung Alissa Park: "Dissertation: Carbon Dioxide Sequestration: Chemical and Physical Activation of Aqueous Carbonation of Mg-bearing Minerals and pH Swing Process", , 2005, XP002677518, The Ohio State University Retrieved from the Internet: URL:http://etd.ohiolink.edu/send-pdf.cgi/P ark%20AhHyung%20Alissa.pdf?osu1124272324 [retrieved on 2012-07-04]

## Description

The invention is in the field of sustainable methods of the production of cement and the functionalization of CO₂ absorbing cement.

Anthropogenic CO₂ emissions, from combustions of fossils fuel resources such as petroleum and coal amount to 36 Gt CO₂/year and have been identified as a major contributor to global warming effects. Unless mankind accepts to face climate change on a massive and global scale at least 6 billion tons of CO₂ per annum have to be sequestered by innovative technologies.

Combustion and physicochemical transformation of fossil energy carriers, such as petroleum and coal for the generation of power, transportation fuels and man made goods, such as cement and base chemicals account for nearly 100% of anthropogenic CO₂ emissions. In order to combat global warming effects, alternative processes that do not rely on fossil energy carriers are being developed. Greenhouse gas (GHG) emissions from transportation fuels such as, petrol and diesel account for 26% of anthropogenic CO₂ emissions. In order to reduce the impact of human transportation needs on climate change, mandates for the production and use of biofuels, such as bioethanol and biodiesel and biogas have been implemented by industrialized G8 nations. Interestingly, biofuels and renewable platform chemicals, which substitute for petroleum based chemical equivalents can be manufactured from complex biomass feedstocks in so called biorefinery settings, which leads to significant CO₂ savings in the production of commodity goods.

Cement based building materials account for 70% of the total global material flow, which accounts to about 14 Bil. t of concrete being traded on a yearly basis. Due to outdated manufacturing processes, the cement industry is responsible for about 5% of global anthropogenic CO₂ emissions. Limestone calcination is the most energy intensive step in traditional Portland cement production, which requires intensive use of fossil energy carriers. It is therefore not surprising that the production of one metric ton cement results in a CO₂ release equivalent to 222kg carbon. To reduce the GHG emission footprint of cement manufacture strategies such as the use of low carbon fuels, CO₂ removal from flue process gases and the development of novel cement compositions have been studied.

Alternative alkaline earth metal carbonate based cement admixtures, which actually can be used for the active CO₂ adsorption, are known. These CO₂ absorbing cement compositions are distinguished from traditional portland cement by durability, lower reactivity (less water, lower pH), reduced solubility of heavy metals (lower pH), density, impermeability and homogeneity, water bleeding, reactivity to environmental reagents such as salt and dimensional stability. While some of the differences to Portland cement are advantageous others constitute drawbacks.

Biorefineries combine physical, chemical and biotechnological methods to fractionate and transform complex biological raw materials such as, straw, wood, sugar beet and oil seed into commodity chemicals, transportation fuels and even consumer goods such as bioplastics. While these processes are very energy and materials efficient thereby improving the GHG emission profile of commodity goods, they also produce low or no- value product side streams (i.e. lignin rich waste, degumming residue, glycerol or fermentation slop), which can only be burned to generate process energy or they have to be disposed by alternative strategies. As these biorefinery "waste" streams often contain high water content, their disposal is associated with energy intensive work up procedures, thereby negatively influencing the GHG footprint of the entire biorefining process. Innovative disposal strategies that could even add value to these "waste streams" have to be developed.

US3398005 describes that traditional Portland cement mixtures may be functionalized by carbonate minerals, pozzolans and the organic compound sulphonated lignin, that influence the physical properties of the cement, which enables its adaptation to various building applications.

US7722850, US2009/202410 and US2010/135882 describe the sequestration of CO₂ by reaction with magnesium silicate minerals.

US4838941 describes cement based on magnesium silicate minerals

US7771684, US2010/230830, WO2010/104989 and WO2010/039903 describe the production of CO₂ absorbing cement on the basis of magnesium silicate minerals.

Even though recently developed methods of the production of CO₂ absorbing cements already constitute a major improvement in the provision of environment friendly building materials, the method of production may still be improved towards a better utilization of resources to further reduce the GHG footprint of cement production.

It is therefore an objective of the invention to provide a method for the production of CO₂ absorbing cement in which the necessary resources are provided by as few technical resources as possible, thereby significantly improving energy and CO₂ efficiency of the production process.

It is a further objective of the invention to reduce waste streams of biorefineries and power plants.

Is it yet a further objective of the invention to provide a process for the manufacture of CO₂ absorbing cement in which the CO₂ for the manufacturing process does not need a purification, chemical or physicochemical conversion or compression step for the CO₂ to be used and which provides CO₂ absorbing cement which is low or free of toxic or carcinogenic substances.

It is a further objective to provide a method for the manufacture of ligated CO₂ adsorbing cement in which CO₂ does not need to be provided in highly concentrated form from an industrial source but is preferentially adsorbed from ambient air.

It is yet a further objective of the invention to provide cement with improved properties which maintains or improves the advantages of CO₂ absorbing cement and Portland cement and which alleviates or reduces the drawbacks. The object is in particular to provide an functionalized CO₂ absorbing cement, wherein at least one functionalising agent is derived from biomass conversion processes.

It is a further objective to provide an unligated CO₂ adsorbing cement product which is capable to ligate under addition of water and adsorption of CO₂ from ambient air and as a result it is an objective to provide a final dried ligated cement product with an appropriate hardness resulting in physicochemical properties equivalent or similar to conventional Portland cement.

The objectives are achieved by a method according to claim 1 and products according to claims 6 and 9.

The objectives are further achieved by preferred embodiments according to the dependent claims.

In particular the problem of the invention is solved by a method for the production of cement utilising by-products generated by a biorefinery unit comprising the following steps
Step 1: Mechanical grinding of a feedstock comprising one or more CO₂ sequestering compounds;
Step 2: Heating the ground feed stock resulting from step 1 to a temperature of 200 to 1500°C, preferably 200 to 750 °C, more preferably 200 to 600 ° C.
Step 3: Functionalizing the dry plain cement resulting from step 2 by addition of one or more biological modifiers selected from the group of lignin, furfural, cellulose, phospholipids, exopolysaccharides and microbial cell residues.
Step 4: Carbonation of the material resulting from step 3 under addition of gaseous CO₂
Step 5: Drying of the mineral carbonates resulting from step 4

Wherein the energy used for step 1 and/or the heat used for step 2 is provided by the biorefinery unit or by a power plant utilizing a product provided by the biorefinery unit and wherein the CO₂ used for step 4 is provided by the biorefinery unit and/or by ambient air.

Thereby all necessary resources, next to the cement feedstock, in form of energy, heat and CO₂ may be provided from a biorefinery unit. Ideally all the energy, heat and the CO₂ are provided by one and the same biorefinery unit. Thereby logistics related to the provision of resources can be simplified and the utilisation of by products of the energy generation can be maximised.

In addition to the provision of CO₂ by a biorefinery unit additional CO₂ for the carbonation of the cement may be sequestered from environmental air during the manufacturing process or thereafter.

In a preferential embodiment of this invention CO₂ for step 4 is solely derived from ambient/ atmospheric air, thereby eliminating the need for any technical equipment to carbonate magnesium oxide based cement compositions. It has surprisingly been found that ligation and settling of CO₂ adsorbing cement is very positively effected by addition of biological functionalising agents, which act as crystal seeds and pore forming units that allow even distribution of atmospheric CO₂ in the cement and finally provide magnesium oxide carbonation and settling/ ligation of the cement composition. Proper settling and ligation is extremely difficult without such agents in such a setting. The elimination of technical equipment and methods for physical and/or chemical CO₂ modification to allow magnesium oxide carbonation and settling of the cement composition is a major advance over state of the art processes.

Addition of at least one biomass derived functionalising agents to the heat treated mineral composition is therefore a preferred embodiment. In the above disclosed method typically water or an aqueous solution is added to the product of step 2 to result in a slurry, before carbonation takes place in step 4. The biological functional agents may be added with the aqueous solution or if the biological functional agent is provided in dry form may be added before the addition of aqueous solution. However in most practical cases biomass functionalising agents contain significant amounts of water (∼20-70%w/w) and may be specifically formulated for final cement application, i.e. klinker, wall plaster, building cement, cement bricks. In such cases the addition of the biological functional agent may also be separate provided a proper ratio of intermediate cement product and water is obtained.

The current methods and technologies disclosed herein focus on functionalizing the resulting magnesium oxide based plain dry cement (step 2) resulting in a mixed manganese oxide based intermediate product which can be stored, sold and transported prior to cement formation. The intermediate typically comprises activated magnesium oxides, magnesiumhydroxides and magensiumaquoxides.

Such a product may be significantly improved by biological modifiers. The so functionalized CO₂ absorbing cement shows enhanced properties in comparison to non-functionalized CO₂ absorbing cement known from prior art. In particular, the properties of CO₂ absorbing cement are improved by functionalization with one or more biological modifiers selected from the group of solid, i.e. non-sulphonated lignin, furfural and phosphorus rich residues, microbial cell residues, biological exopolysaccharides or any mixture thereof. In a preferred embodiment the biological modifiers are provided in form of biorefinery waste streams, thereby further reducing industrial by-products which would need to be disposed of otherwise. Ideally the biorefinery waste streams are provided by the same biorefinery unit providing energy, heat and/or CO₂.

Up until now the manufacture of CO₂ adsorbing cement required the addition of in highly concentrated gaseous and ideally pressured form to achieve an appropriate hardness of the cement. It has surprisingly been found that the functionalization of CO₂ adsorbing cement with biological modifiers improved ligation and settling of the cement in a way that adsorption of CO₂ from ambient air is sufficient to achieve a ligated cement with appropriate hardness after drying. The resulting magnesium carbonate based product shows equivalent hardness as comparable Portland cement. Additional parameters such as salt and corrosion resistance are superior for magnesium carbonate based products disclosed herein compared to Portland cement standards.

The high water content of these biorefinery waste streams can be a desired feature in cement production as it reduces the need for process water.

In a preferred embodiment of this invention the CO₂ sources for the manufacture of CO₂ absorbing cement compositions are derived from fermentative process steps present in biorefineries, which may encompass but are not limited to biogas production, alcoholic fermentation or any other kind of CO₂ producing fermentation or energy production process. In contrast to fossil fuel derived CO₂ sources, these biological CO₂ sources do not require physicochemical conditioning of the CO₂ source prior to utilization in the cement production process.

In another preferred embodiment the CO₂ absorbing cement is further functionalized by other physical or chemical modifiers or fillers which do not stem from biorefinery waste streams such as for example pozzolans, alkyl-epoxides, rubber, fly ash, furnace slags. The functionalized cement product which is obtainable from afore mentioned manufacturing process is also an aspect of the invention. Such a settled functionalized cement product comprises the main products of the carbonation reaction comprising MgCO₃, as well as residues of unreacted feedstock. The unreacted feedstock may identify the origin of the CO₂ adsorbing cement. Typically amounts of 0,01 - 5 % w/w, preferably 0,03 - 2 %, of unreacted feedstock can be found in the final product. The product furthermore comprises one or more biological modifiers selected from the group of non-sulphonated lignin, furfural and phosphorus rich residues or any mixture thereof. In addition the funtionalized cement product may comprise further ingredients among them further physical and chemical modifiers, fillers or admixtures of other cement products.

The terms used in the description of the invention are defined as follows.

The term biomass refers to any complex biogenic substrate, which can be fractionated into its chemical component fractions and transformed into other products. Non-limiting examples are wood, cereal straw, weeds, grass, plant oil, seeds, potato, sugar beet and sugar cane.

The term lignocellulosic biomass refers to any complex biogenic substrate, which contains lignin and cellulose. Non-limiting examples are wood, cereal straw, cotton stalks, sugar cane bagasse.

The term biorefinery refers to any set of chemical, physical, biochemical, biological and biotechnological processes that can fractionate biomass and transform the resulting fractions into value adding commodity products such as biofuels, bioenergy, chemicals, polymers, food/feed additives and pharmaceuticals.

The term carbohydrate refers to any monomeric, oligomeric or polymeric carbohydrate. Non limiting examples include cellulose, xylan, arabinan, mannan, pectin, glucose, arabinose, xylan, galactose, mannose, galacturonic acid.

The term furfural-rich refers to any solid or liquid biorefinery product, waste or intermediate stream, that has undergone hydrothermal treatment in the absence or presence of acid and where pentose and/or hexose sugars have been dehydrated to form furfural (Furan-2-aldehyd) and/or 5-hydrolymethylfurfural.

The term hexose refers to any uncharged polymeric or monomeric carbohydrate with a six carbon skeleton. Non limiting examples are cellulose,mannan, galactan, galactose, glucose and mannose.

The term lignin (General formula: C₉H₁₀O₂, C₁₀H₁₂O₃, C₁₁H₁₄O₄)- rich refers to biomass or biomass fractions enriched in polymeric phenylpropanoids, which contain varying degrees of the monolignols p-coumaryl alcohol, coniferyl alcohol, and sinapyl alcohol. Lignin as used in the invention is unsulphonated lignin and needs to be distinguished from sulphonated lignin. In contrast to sulphonated lignin unsulphonated lignin as disclosed herein has a much greater average molecular weight and has significantly greater crystal properties. Further, lignin in terms of the current invention is a solid, which is distinct from sulphonated lignin that is mostly a liquid based slurry. The lignin preferentially utilised in this invention results from hydrothermal pretreatment (T= 90-230°C, t=1-60min, p=1-100bar) of lignocellulosic biomass in the absence of mineral acid and/or liquefaction/ solubilisation of carbohydrate components via enzymatic (i.e. hydrolase enzyme activities) methods. The remaining lignin based solid is used for cement applications as described in this invention.

The term pentose refers to any polymeric or monomeric carbohydrate with a five carbon skeleton. Non limiting examples are xylose, xlyan, arabinose, arabinan.

The term phospholipid refers to any glyceride containing a phosphate group and an organic residue such as choline.

The term polymeric carbohydrate refers to any homomeric or heteromeric pentose and/or hexose based polymer. Non-limiting examples are cellulose, arabinan, xylan, galactan, mannan and chitin.

The term microbial cell residue refers to any untreated and inactivated microbial biomass resulting from fermentation processes. Non-limiting examples are cell residues of yeasts, bacteria, algae, and filamentous fungi. Microbial cell residues are non-viable microbial cells comprising 1 - 40 % lipids w/w, 2 - 40 % protein w/w and 3 - 10 % DNA w/w.

The term soluble phenolics refers to any soluble degradation products of lignin, which contain the either free and methoxylated forms of the monolignol: p-coumaryl alcohol, coniferyl alcohol, and sinapyl alcohol.

The term exopolysaccharides refers to poly- and oligomeric sugars composed of alternating glucose and/or galactose and/or mannose monomers. These biological materials are derived from extracellular secretions of microbial organisms and/or macro-organisms belonging to the genera Mollusca, Cnidaria.

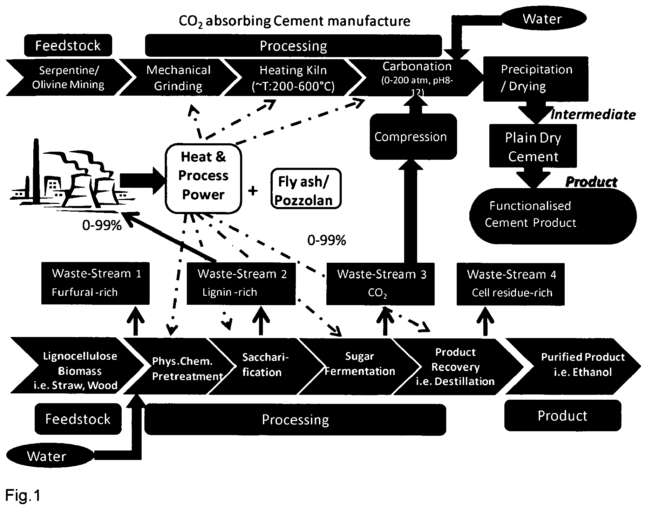

Figure 1 shows a process for the production of CO₂ absorbing cement according to an embodiment of the invention in which the biorefinery unit is based on the processing of lignocellulose materials.

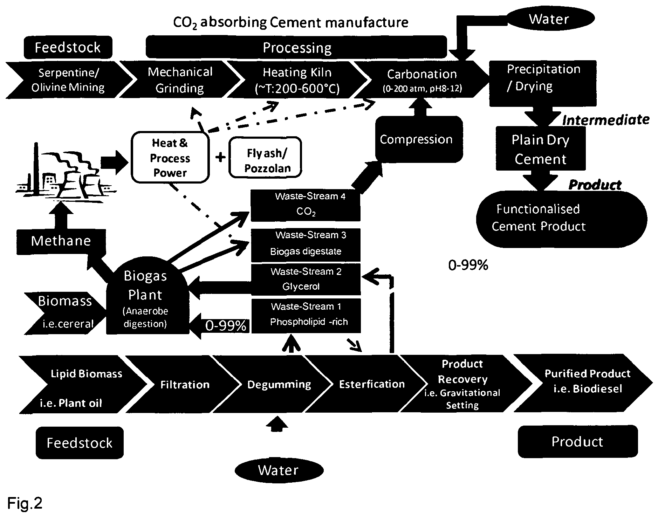

Figure 2 shows a process for the production of CO₂ absorbing cement according to an embodiment of the invention in which the biorefinery unit is based on the processing of lipid materials.
Figure 3 shows the CO₂ adsoption kinetics of lignin functionalised based MgO cement from ambient air

In the following several ways of practicing the invention and preferred embodiments of the invention are described in a non-limiting manner.

The invention relates to production of CO₂ absorbing cement compositions from a feedstock comprising one or more CO₂ sequestering compounds. In a preferred embodiment such CO₂ sequestering compounds are based on alkaline earth metal carbonates and hydroxides In a preferred embodiment of this invention either serpentine, olivine, brucite, pyroxene and magnesiumoxide are utilized as alkaline earth metal donors for the production alkaline earth derived carbonates, the most preferred materials being serpentine and/or olivine. This basic method for the manufacture of CO₂ absorbing cement is known to the skilled person The utilization of serpentine is advantageous for an industrial production of CO₂ absorbing cement bodies due to the natural availability of serpentine and olivine in nature and hence its low production cost.

The serpentine reaction: Mg₃Si₂O₅(OH)₄+ (heat → intermediate comprising various activated Magnesium oxides, magnesiumhydroxides, magensiumaquoxides and SiO₂ → addition of) 3 CO₂ → 3 MgCO₃ + 2 SiO₂+2 H₂O
The olivine reaction: Mg₂SiO₄+ (heat → intermediate comprising various activated Magnesiumoxides, magnesiumhydroxides, magnesiumaquoxides, and SiO₂ → addition of) 2 CO₂ → 2 MgCO₃ + SiO₂

One significant feature of alkaline earth mineral carbonation is the thermodynamic stability of the resulting carbonates. This stability enables a safe and permanent storage of the Greenhouse gas CO₂ in a solid form over geological time periods.

In the final product typically a ration of MgCO₃ to SiO₂ of 3:1 to 1:3 can be found. Furthermore the final product comprises typically combined amounts of MgCO₃ and SiO₂ of 60 - 98 % w/w, preferably 75 - 96 % w/w,

The use of CO₂ adsorbing cement has the significant ecological advantage over the use of classical Portland cement in that it has a negative CO₂ balance. In contrast the production of Portland cement comprises the step of burning CaCO₃ feedstock to CaO as the intermediate product. The final settled, dried and ligated product of Portland cement is only obtained under addition of water forming a cement product comprising calcium oxides and hydroxides.

Obtaining the final dried ligated CO₂ adsorbing cement on the other hand requires both the addition of water and CO₂ to the intermediate product which comprises various activated Magnesium oxides as the reactive compound.

The unit operations for the manufacture of CO₂ absorbing cement compositions comprise, mineral (i.e. Serpentine, Olivine, Brucite, Pyroxene, Magnesiumoxide) mining, mechanical grinding, heating the ground mineral mass at higher temperatures, carbonation and finally precipitation and drying of the resulting mineral carbonates to formulate a plain CO₂ absorbing cement product.

Especially, grinding, heating and carbonation unit operations require a significant energy and heat input, which is commonly is supplied by conventional fossil fuel power plants which may also supply CO₂ to the production process of the cement.

According to an embodiment of the invention both CO₂ generated by a biorefinery unit as well as heat and process energy generated by direct or indirect (via a biogas intermediate) burning of biorefinery residues, is supplied to unit operation in cement manufacture. As the heat and energy generation from biomass residues is CO₂ neutral, a significant reduction in the greenhouse gas foot print for CO₂ absorbing cement manufacture is achieved. For example in lignocelluloses based biorefinery settings low value side streams such as lignin rich residues are commonly burned to produce CO₂ neutral heat and process energy An alternative to direct burning of low value biorefinery residues is their utilization as feedstocks for the production of biogas. Lignin (lignocellulose saccharification residue), phospholipid (plant oil degumming) or microbial cell residue (fermentation slop) rich waste streams resulting from lignocellulose (i.e. lignocellulose based ethanol production), lipid (i.e. plant oil based biodiesel production) and starch (i.e. wheat based bioethanol production) based biorefinery operations are commonly utilized in biogas operations. The biogas product can subsequently be burned in a power plant to produce heat and process energy. In contrast to the provision of CO₂ as flue gases from fossil fuel power plants, cement factories or petroleum refineries as known from prior art in a preferred embodiment of this invention the CO₂ sources for the manufacture of CO₂ absorbing cement compositions are derived from fermentative process steps present in biorefineries, which may encompass but are not limited to biogas production, alcoholic fermentation or any other kind of CO₂ producing fermentation or energy production process. In specific case of biogas derived CO₂, the anaerobic fermentation process results in a gas mixture of CO₂ and methane. The separation of these gaseous components can be achieved by adsorption processes, centrifugation technologies known to the skilled person (US 2009/0211441). While the purified CO₂ is utilized in carbonation processes for CO₂ absorbing cements, the methane will be burned in a gas power plant to generate process energy for biorefinery and cement production unit operations. Alternatively the biogas mixture of methane and CO₂ is burned and CO₂ evolving from the biogas based power plant will be utilized in cement manufacture.

In contrast to fossil fuel derived CO₂ sources, these biological CO₂ sources lack unfavourable contaminants such as mercury, NOx or volatile organic carbon, which may negatively influence the properties of the resulting cement composition. The use of biological CO₂ sources therefore eliminates the need of physicochemical conditioning of the CO₂ source prior to utilization in the cement production process.

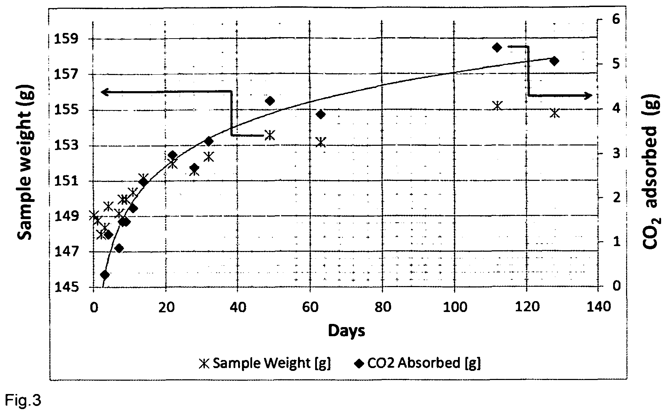

In a preferred embodiment of this invention the plain CO₂ absorbing cement composition is prepared in a dried (burned) powder form of the intermediate product prior to addition of functionalizing additives, water and CO₂. Commonly the plain CO₂ absorbing cement intermediate composition (powder) is mixed with water and other additives to obtain a fluid cement slurry, which can be cast into defined shapes particular to the desired building application. A common example is the casting of cement slurries into square blocks for later use a breeze (see Fig. 3) or building blocks.

In one embodiment of this invention either the CO₂ absorbing cement compositions and/or their functionalized congeners are mixed with water to create a slurry, which can be cast into any shape, which later sets into a solid form, preferably for use as breeze blocks, walls, floorbases and plaster.

The preparation of the cement slurry requires mixing of the dry cement power (with or without additives) with a defined volume of water.

In one embodiment of this invention the preparation of castable cement slurries requires water (liquid) to dry cement powder w/w mixing ratios in the order of 0.01-0.7, more preferably 0.2-0.6 and even more preferably 0.3-0.5. The actual amount of process water that needs to be added to the cement powder may be reduced if the functionalizing additives contain a certain amount of water, which has to be considered in the desired mixing regimes. The addition of large volumes of water will result in rather fluid slurries, which results in an increased curing time that retards the formation of a solid mass that can be used for building materials.

The resulting slurry of CO₂ adsorbing cement also requires addition of CO₂ to the slurry to obtain the final ligated product. This is a serious limitation compared with Portland cement, which only required addition of water, at least when CO₂ needs to be added in concentrated gaseous form or in form of CO₂ comprising solutions which both requires specialized equipment to provide those ingredients in sufficient amounts.

In one embodiment of this invention the cement curing time, physical strength, corrosion and hydraulic properties of the cement slurry can significantly be influenced by biogenic and non-biogenic additives derived i.e. from biorefinery activities.

In this invention it was surprisingly found that untreated, minimally processed and/or dewatered biorefinery waste streams can modulate the physical properties of CO₂ absorbing cement compositions based on the serpentine reaction, thereby modulating curing (settling) time, porosity, water retention, plasticity, high physical strength and hydraulic properties. In a preferred embodiment of the invention the biorefinery waste streams are not modified by additional processes, i.e. they are untreated.

Moreover, it has been surprisingly found that in particular the addition of biogenic additives can modify the intermediate CO₂ adsorbing cement product comprising activated magnesium oxides in such a way that the addition of water only may result in a final dried and ligated product showing a hardness according to a Mohs scale of 2 - 3. This product therefore shows comparable hardness as conventional Portland cement. In preferred case CO₂ is absorbed from ambient/ atmospheric air during the drying process. Without the addition of the biological modifiers of the invention it takes CO₂ adsorbing cement much longer to cure when recruiting CO₂ from ambient air only and results in a cement product with significantly less hardness, which in many cases are inadequately brittle.

Without being bound to theory it is believed that in particular biological modifiers with a large average molecular weight and/or crystallinity and/or surface area can function as nucleation and crystallization bodies enhancing the drying and curing process. The curing process is particularly enhanced using biological modifiers with a weight average molecular weight of Mw > 600 g/mol, preferably Mw > 5000 g/mol, more preferably Mw > 10.000 g/mol. Greater molecular weight could enhance the properties of biological modifiers as crystallization bodies. Further the nucleation and surface properties of the biological modifiers result in pore formation in the cement slurry, which allow even access and distribution of atmospheric CO₂ in the cement slurry, thereby enhancing formation of magnesiumcarbonate that lead to settling and hardening of the slurry, which then comprises the final cement product.

Ideally one or more biological modifiers are comprised in a cement composition in an amount of 0,5 to 60 w/w, preferably 1 to 20 % w/w and even more preferably 1-10%w/w. Even though modification of CaO based Portland cement with biological modifiers such as lignin sulphonate has been known, it is surprising that the biological modifiers may also be used in CO₂ adsorbing cements to such a great effect. The result is unexpected because of the significantly different chemistry of the cement types, most predominantly CaO based cements are of basic nature while MgO based cements (CO₂ adsorbing) are of a more acidic nature. Also the settling mechanism is substantially different.

Moreover, the biological modifiers of the invention enhance the properties of both CaO and MgO based cements stronger than lignin sulphonate known from prior art. The reason may lie in the comparably low molecular weight of lignin sulphonates, it may also lie in the fact the lignin sulphonates are soluble while the biological modifiers of the invention are substantially crystalline, unsoluble and/ or have a high surface area. It may furthermore lie in the fact the untreated lignin shows a significantly higher crystallinity index compared to lignin sulphonates.

The other biological modifiers disclosed herein, have not been tested as additives in Portland cement compositions.

In a preferred embodiment of this invention low or no value biorefinery waste streams that positively affect the physical properties of CO₂ absorbing cement composition are:
1.) Lignin and/or furfural rich residues derived from processing of lignocellulosic materials. While Furfural rich residues are obtained after the thermolytic or hydrothermolytic pretreatment of lignocellulose in ethanol production (Yang, B. Wyman, C.E. (2009) Dilute acid and autolysis pretreatment in Mielenz, J.R. (ed), Biofuels: Methods and Protocols, Methods in Molecular Biology, Vol. 581 pp., 103-114), lignin rich residue is obtained after subsequent enzymatic saccharification step in the same process (Bioethanol Production via Enzymatic Hydrolysis of Cellulosic Biomass (2008) Bioethanol Production via Enzymatic Hydrolysis of Cellulosic Biomass. J.Sci. and Ind. Res. 67, pp. 874-888).

In a preferred embodiment of this invention the lignin rich residues are free of sulphates and sulphonated lignin components as they complicate the functionalization of cement compositions.
2.) Solid and optionally heat deactivated digestate residues derived from biogas production activities, which are enriched in native lignin and polymeric carbohydrates such as cellulose.
3.) Degumming residues rich in phospholipds obtained during the processing of natural (triglyceride) based oils.
4.) Biogenic exopolysaccharides derived from macro (i.e. molluscs)- and/or microorganisms (i.e. bacteria, yeasts, filamentous fungi).

The general range of the chemical composition of the biogenic cement modifiers employed in this invention are detailed below:
1.) Lignin rich residue:
   Lignin: 1-100% w/w
   Carbohydrate: 0-50% w/w
   Water: 0-80 % w/w
   Soluble Phenolics: 0-30% w/w
   Wax: 0-10%w/w
2.) Furfural rich residue:
   Pentose sugars: 1-70% w/w
   Hexose sugars: 0-20% w/w
   Furfural: 0-80% w/w
   5-hydroxymethylfurfural: 0-50% w/w (need to polymerize this to stabilize cement composition!)
   Phenolics: 0-30% w/w
   Water: 0-80 % w/w
3.) Phosphorus rich degumming residue:
   Phospholipids: 10-99% w/w
   Lipids: 0-35% w/w
   Carbohydrates: 0-99% w/w
   Proteins: 0-30 % w/w
   Water: 0-80% w/w
4.) Solid Biogas digestate:
   Lignin: 10-99% w/w
   Microbial cell residues: 1-50% w/w
   Carbohydrate: 0-90% w/w
   Water: 0-90% w/w
5.) Cell-rich residues:
   Microbial cell residues: 1-99% w/w
   Carbohydrate: 0-40% w/w
   Water: 0-90% w/w

In preferred practice of this invention the above biogenic components used for cement functionalizing will be used in an untreated, minimally treated and/or dewatered form. Preferred work up procedures for biogenic waste streams include 1-2 water or organic solvent washing cycles of solid residues, wherein the water volumes applied for washing are 0-1000 times the volume of the solid residue to be processed. Preferred organic washing agents include primary alcohols, i.e. methanol, ethanol, butanol or their corresponding ethers. In another preferred embodiment of the invention the washing solution may comprise any volumetric mixture between water and any of the listed organic washing agents. The washing cycles may be required to remove soluble sugars and phenolic compounds, which may negatively affect compression strength and settling time of the final cement composition.

Generally the high water content of biorefinery waste streams is a desired feature in cement production as it reduces the need for process water. However, in cases where the waste stream does not contain a desired concentration of the target component (i.e. lignin), the water content has to be reduced prior to application in cement manufacture. Therefore, in a preferred practice of the invention the utilized waste stream of the biorefinery unit is only modified by dewatering. Thereby the solid components of the biogenic waste streams may be enriched, for example by standard centrifugation or filtration processes.

In one embodiment of the invention the particle size of lignin rich residues and of biogas digestate solid fractions are reduced by mechanical milling to particles between 0.01-2cm, more preferably, 0.1-1cm and even more preferably 0.1-0.5 cm in size for application in cement functionalization.

In a particular embodiment of this invention furfural containing waste streams (http://www.worldbiofuelsmarkets.com/downloads/presentations/Biorefineries_15th/Hans_R eith.pdf) resulting from hydrothermal or thermochemical mobilization (US4916242) of pentose derived from lignocelluloses feedstocks (Fuel (2010) 89, pp. 2873-2880), are concentrated to further enrich furfural components through evaporation techniques that reduce the water content. Non- limiting examples of evaporation techniques are vacuum distillation, gas stripping (US 4155804) under reduced pressures and simple heating of the water phase.

Addition of Lignocellulose may increase physical strength and reduced water requirements of cement made from plain dry cement

Lignin sulphonates, a waste stream from pulp and paper manufacture, have been documented to increase the binding capacity of portland cement compositions. In this invention it has surprisingly been found that non-sulphonated lignin residues act as strongly improved binding accelerators in the production of CO₂ absorbing cement compositions. Lignin rich waste streams are the solid fraction left after chemical or enzymatic saccharification of lignocellulosic biomass (Bioresour Technol. (2010) 101, pp. 5023-32, Biotechnol Adv. (2010) 28, pp.541-2; Proc Natl Acad Sci USA. (2010) 107, pp.4516-21). As the actual chemical composition of biorefinery residues will vary with feedstock, process conditions and work up conditions, the concentrations of residues that have to be added to improve the physical characteristics of the cement composition will always be referenced with respect to the total lignin concentration.

In a preferred embodiment of this invention the lignocellulosic waste stream is produced by hydrothermal pretreatment (i.e. in the absence of acid or base catalysts) of a lignocellulosic feedstocks (i.e. wood, straw) combined with subsequent enzyme (i.e. Cellulase) hydrolysis (solubilisation) of carbohydrate components within a biorefinery setting or a cellulosic ethanol plant. The solid lingocellulosic waste stream is then separated from the carbohydrate rich supernatant by centrifugation, filtration or any other physical methods for solid: liquid separation.

In a preferred practice of this invention, the resulting lignocellulosic waste stream is then analysed for soluble carbohydrates, phenolics and insoluble lignin prior to further processing. Ideally the native lignin rich waste stream should contain less than 10% w/w dry weight and more preferably less than 5% w/w dry weight soluble sugars and phenolics. In cases where these specifications are not met, appropriate washing cycles may be implemented to reduce the soluble fraction below the required limits.

For exact dosing of the lignin rich residue in CO₂ absorbing cement compositions, the mass % in each dosing regime are referenced solely to the lignin fraction of the of the total residue mass.

In a particular embodiment of the invention a modified CO₂ absorbing cement composition with an increase in physical strength and air entrainment, a reduction in water use and a negligible reduction in curing (setting) time compared to the plain cement composition is accomplished by addition of 0.001-10% lignin residues w/w cement dry solids.

More preferably the CO₂ absorbing cement composition with increased physical strength settling time and reduced water requirements contains 0.01-1% lignin residues w/w cement dry solids and even more preferably 0.1-2% lignin residues w/w cement dry solids.

In yet another preferred embodiment of the invention the lignin rich residue fraction added to the cement composition is laced with 0.01-35% w alkylepoxide/ w lignin residue dry solids, in cases where the lignin rich residue contains more than 5% w/w soluble carbohydrates and phenolics. More preferably the lignin rich residue fraction added to the cement composition is laced with 0.1-6% w alkylepoxide/ w lignin residue dry solids.

In yet another preferred embodiment of the invention the lignin rich residue fraction added to the cement composition is laced with 0.01-35% w natural rubber, poly-vinyl-acetate, styrene-butyl-acrylate, butyl-acrylate-methyl-acrylate, styrene-butadiene or butadiene polymers/ w lignin residue dry solids. More preferably the lignin rich residue fraction added to the cement composition is laced with 0.1-3% w natural rubber or butadiene polymers/ w lignin residue dry solids. The addition of these polymers provides for a higher early strength and for an initial reduction in setting time.

The compressive strength of the resulting cement product is increased 0.01-10 times compared to the plain product. In a further aspect of the invention the air entrainment of the modified product is increased 0.1-16 fold over the plain product.

The addition of organic phosphates from phosphorous rich residues may increase physical strength, high porosity, plasticity, air entrainment and reduced curing times and corrosion resistance of cement made from plain dry cement.

Inorganic phosphorous salts are a known binding and hardening accelerators in CO₂ absorbing cement compositions (Zhurmal Prikladnoi Khimii (2006) 79, pp. 529-532). In this invention it was surprisingly found that organic phosphates serve as excellent binding accelerators. Phosphorelated biomass residues result from degumming processes of edible or other natural oils (http://www.srsbiodiesel.com/Degumming.aspx; http://ddr.nal.usda.gov/bitstream/10113/28430/1/CAIN789045047.pdf). In a non-limiting practice of this invention concentration and dewatering can be achieved by centrifugation and simple gravitational setting of the degumming waste streams.

In a preferred practice of this invention the phosphorous rich additive dosing will solely refer to the phospholipid fraction of the degumming residues used as additives in cement compositions.

In one embodiment of this invention, the phosphorous residues are added in a concentration of 0-40% w/w dry weight plain cement, more preferably the phosphorous residues are added in a concentration of 6-15%w/w and even more preferably 10-14% w/w to the dry cementous composition thereby resulting in higher water resistance, reduced corrosiveness and higher compressive strength.

In particular instances where the phosphorous rich residue contains more than 5% soluble carbohydrates, neutral lipids or proteins, the cement composition is additionally laced with 0.01-35% w natural rubber, poly-vinyl-acetate, styrene-butyl-acrylate, butyl-acrylate-methyl-acrylate, styrene-butadiene or butadiene polymers/ w lignin residue dry solids. More preferably the phosphorous rich residue fraction added to the cement composition is laced with 0.1-3% w natural rubber or butadiene polymers/ w lignin residue dry solids. The addition of these polymers provides for a higher early strength and for an initial reduction in setting time.

In yet another preferred embodiment of the invention phosphorous rich residues may be intermixed with lignin rich residues if these contain more than 2% w/w soluble sugars, phenolics, organic or inorganic sulphates. In order to obtain the desired decrease in cement curing times or an increase in compressional strength, corrosion resistance phosphorous rich residues may be intermixed with lignin rich residues at mass ratios of 0-70%w/w, more preferably 4-60% w/w and even more preferably 10-35% w/w with respect to lignin and phospholipids components in these residues respectively.

In a most preferred embodiment of this invention the intermixed functionalization agent containing both phosphorous and lignin rich waste streams may be laced with 0-45%w/w any other natural or non natural additives as defined in this invention to obtain the desired reduction in curing time and/or increase in air entrainment and compressional strength. The addition of biogas digestate may increase physical strength, high porosity, plasticity of cement made from plain dry cement

In a preferred embodiment of this invention solid biogas digestates from biorefinery processes or biogas plants are used to increase the physical strength of CO₂ absorbing cement compositions.

Solid biogas digestate is the non-fermentable residue of a biogas process (http://air.unimi.it/bitstream/2434/50234/1/WhatIsTheDigestate.pdf, http://www.ieabiogas.net/Dokumente/Task37_Digestate_brochure9-2010.pdf). Depending on the feedstocks entering the process and the individual process parameters, these solid residues can be enriched in both lignin- and polymeric carbohydrates such as cellulose. In order to adjust the dosing of these biomass residues in the functionalizing CO₂ absorbing cement compositions, the chemical composition needs to be determined. Therefore, in a preferred practice of the invention the solid biogas residue biogenic waste is analysed for soluble and insoluble carbohydrates (i.e. cellulose), soluble phenolics and insoluble lignin prior to further processing.

According to a preferred embodiment of this invention the solid biogas digestate should contain less than 10%w/w dry weight and more preferably less than 5% w/w dry weight soluble sugars and phenolics. In cases where these specifications are not met, 1-2 water washing cycles according to the methods detailed in this invention have to be implemented to reduce the soluble fraction below the required limits.

For exact dosing of the solid biogas digestate in CO₂ absorbing cement compositions, the mass % in each dosing regime only are referenced solely to the lignin fraction of the of the total residue mass.

In a particular embodiment of the invention a modified cement composition with an increase in physical strength, a reduction in water use and a negligible reduction in setting time compared to the plain cement composition is accomplished by addition of 0.001-10% solid biogas digestate w/w cement dry solids.

More preferably the CO₂ absorbing cement composition with increased physical strength settling time and reduced water requirements contains 0.01-3% solid biogas digestate w/w cement dry solids and even more preferably 0.1-2% solid biogas digestate w/w cement dry solids.

In yet another preferred embodiment of the invention the lignin rich residue fraction added to the cement composition is laced with 0.01-35% w alkylepoxide/ w solid biogas digestate dry solids, in cases where the solid biogas digestate contains more than 5% w/w soluble carbohydrates and phenolics. More preferably the solid biogas digestate added to the cement composition is laced with 0.1-6% w alkylepoxide/ w solid biogas digestate dry solids. In yet another preferred embodiment of the invention the solid biogas digestate added to the cement composition is laced with 0.01-35% w natural rubber, poly-vinyl-acetate, styrene-butyl-acrylate, butyl-acrylate-methyl-acrylate, styrene-butadiene or butadiene polymers/ w solid biogas digestate dry solids. More preferably the solid biogas digestate added to the cement composition is laced with 0.1-3% w natural rubber or butadiene polymers/ w lignin residue dry solids. The addition of these polymers provides for a higher early strength and for an initial reduction in setting time.

The compressive strength of the resulting cement product is increased 0.01-10 times compared to the plain product. In a further aspect of the invention the air entrainment of the modified product is increased 0.1-30 fold over the plain product. In another aspect of the invention the curing time is reduced 2-10 fold, more preferably 2-5 fold and even more preferably 2-3 fold over the plain cement composition.

The addition of furfural may increase physical strength, high porosity, plasticity and air entrainment of cement made from plain dry cement

In a preferred embodiment of this invention furfural rich waste streams from biorefinery processes or cellulosic ethanol plants are used to increase the physical strength of CO₂ absorbing cement compositions.

Hydrothermal pre-treatment processes in the absence or presence of acid or base catalysts are used in biorefinery processes to enhance downstream saccharification processes of lignocellulosic feedstocks (Biores.Technol. (2000) 74, pp.25-33; Methods Mol.Biol. (2009) 581, pp. 93-102; Biores. Technol. (2009), pp. 10-18; Biores.Technol. (2009), 100, pp. 3948-3962; Biores. Technol. (2005) 96, pp. 673-686; Int.J.Mol.Sci. (2008), 9, pp. 1621-1651). These hydrothermal processes are commonly carried out at elevated temperatures between 100- 260°C and result in the solubilisation the pentose and partially of the lignin fraction of the respective lignocellulosic feedstocks (Biotech. Bioeng. (1983) 25, pp. 3149-3161). With increasing temperatures and acid concentrations in the pre-treatment process the mobilized pentose is further converted into furfural (Biores.Technol. (2000) 74, pp.25-33, US 4897497). The aqueous solutions obtained after physicochemical pretreatment steps of lignocelluloses often contain minor concentrations of furfural (∼0.5-30% w/v) and residual pentose.

In one embodiment of this invention the furfural containing pretreatment solution can either be used in its native form for the fictionalization of CO₂ absorbing cement compositions or it can optionally be treated to obtain a furfural enriched fraction prior to utilization in cement manufacture.

To obtain a furfural enriched solution non limiting examples of enrichment procedures include heating the solution above 150-250°C for 0.01-100h in the absence or presence of 0.1-10M mineral acid (i.e. H₂SO₄, HCl, H₂NO₃), which quantitatively converts all remaining pentose into furfural (Biores. Technol. (1998) 66, pp 189-193). Alternatively furfural can also be selectively removed from the aqueous phase via vacuum distillation, selective adsorption or other physicochemical means to obtain a furfural rich liquid residue (US3531463).

In a yet another preferred embodiment of this invention biogenic exopolysaccharides derived from biorefinery processes involving microorganisms or aquaculture of molluscs/ cnidaria are used to increase the physical strength of CO₂ absorbing cement compositions. Expopolysaccharides may be extracted from the producer organisms by flocculation with divalent cations (i.e. Ca²⁺ ions), activated clays (i.e. bentonites) or via centrifugal steps. These biogenic modifiers are used without further processing and may be mixed with other biological modifiers and/or inorganic modifiers. The addition of 0.1-10% w/w exopolysaccharides decreases curing time at least 2 fold and will subsequently increase physical strength of the settled and ligated cement product by at least a factor 0.5, providing a Mohs hardness of at least 2.

Several additional supplements and functionalization agents may be used in CO₂ absorbing cement compositions to improve various properties

Due to the natural and process dependent variations in biorefinery residues, the addition of other natural or non-natural cement modifiers may be necessary to achieve the desired hydrolytic cement properties.

In the processes disclosed in this invention natural and non-natural cement additives that may be mixed with biogenic waste streams are defined as: alkyl or haloalkylepoxides, natural rubber, guayule, wood resin, methyl or ethyl cellulose, Avicel, polymeric isoprene, synthetic rubber, poly-vinyl-acetate, styrene-butyl-acrylate, butyl-acrylate-methyl-acrylate, styrene-butadiene or butadiene polymers.

The reaction products of biorefinery wastes and above natural and non-natural additives may be added to the cement compositions during or after its manufacture or to motar or concrete mixtures.

It is a preferred practice of the invention to intermix the additive mixtures to the cement compositions during the manufacturing process if the admixtures are supplied in a dried form.

In another preferred practice of the invention high water containing biorefinery residues are mixed with other natural or non-natural additives in desired concentrations and may be supplied as a defined suspension additives just prior to preparation of the concrete slurry in the field.

In yet another preferred practice of the invention an alkaline (Li, Na, K, Rb, Cs, Fr) or alkaline earth metal (i.e. Be, Mg, Ca, Sr, Ba, Ra) salt may be added as a hardening accelerator in concentrations of 0.1-20% w/ w cement composition, more preferably 1-10% w/w, and even more preferably 1-5% w/w with reference to the dry weight of any of the described cement compositions in order to facilitate hardening of the cement: water slurry.

In a preferred practice of this invention the hardening accelerator comprises NaNO₃, KNO₃, Na₂SO₄, Na₂HPO₄, NaH₂PO₄, K₂HPO₄, KH₂PO₄, MgCl₂ or CaCl₂, which is added in concentrations of 0.5-2% w/ dry weight of the functionalized cement composition.

Pozzolans are organic or inorganic cement fillers, which are not regarded as hydraulic components of cement compositions *per se*. In a preferred practice of the invention pozzolans are inorganic fillers such as fly ash from industrial power plants, petroleum refineries or any other industrial energy production process resulting in fly ash production.

In a preferred embodiment of this invention fly ash (i.e. biogenic fly ash) is used from biomass (i.e. lignin residue) burning activities, which are standard practice for on site-energy generation in biorefinery settings (Bioresources (2007), 2, pp. 707-38). This fly ash is generated by an CO₂ neutral process and therefore adds to the GHG footprint of the cement production process described herein. This biogenic fly ash acts as a nucleation agent for crystallization processing during the cement curing and setting processes. To reduce crystallization and curing times during cement manufacture biogenic fly ash is added at concentrations between 0-50 % w/ dry weight of the plain cement composition, more preferably to 10-40% w/ dry weight of the plain cement composition and even more preferably 25-35% w/ dry weight of the plain cement composition. The addition of these pozzolans will reduce the cement curing time 0.1-10 fold compared to the plain cement composition without addition of filler materials.

In yet another preferred embodiment of this invention pozzolans may either be high alumina slags, kiln dust, blast furnance slags or bentonite (i.e. Montmorillonite) type Smectite Clay minerals (http://www.epa.gov/osw/nonhaz/define/pdfs/foundry-sands.pdf). In a preferred embodiment of this invention these non-biological additives may be added at concentration between 0-50% w/w, more preferably 10-20% w/w and even more preferably 12-18% w/w of the dry CO₂ absorbing cement composition.

In the following non limiting examples illustrate how the invention may be put in practice.

In an alternative embodiment of the invention hydrotreated lignin, biogas digestate, exopolysaccharides and phospholipid (degumming) residues are used as functionalizing agents for modification of CaO based Portland cement preparations. The addition of these biogenic residues together with conventional organic and inorganic additives described alters the hydrolytic properties of Portland cement. Particularly addition of biogenic additives at concentrations of 1-60% w/w, more preferably 1-15% w/w and even more preferably 1-12% w/w reduce curing, settling time and increase pore formation of Portland cement by 1.3-16 fold in a concentration dependent manner. In particular pore formation is advantages in cement preparations used in building brick manufacture as air retention significantly increases heat retention and therefore provide additional insulating/ energy saving capacity to building materials containing biogenic modifying agents.

In yet another embodiment of this invention any mixture of Portland and Magnesium oxide (CO₂ adsorbing) based cement containing biogenic functionalizing agents may be used for tailoring settling time and pore distribution of building materials.

### Examples

### Example 1 (Sourcing and compositional analysis of cement building blocks)

**Serpentine raw material:** Serpentine rock was sourced at a road works site in Punta Cana, Dominican Republic and from a natural mineral deposit in Zöblitz, Germany provided by the company Zöblitzer Natursteine GmbH. The classification of the utilized rock was carried out according to literature precedence (Nonuex J Pacn, LI .(1968) CHEMICAL DIFFERENCES AMONG THE SERPENTIN POLYMORPHS", THE AMERICAN MINERAIOGIST, 53, pp. 201-215) as well as measured XRD datasets. The rock was a brown- green translucent mass with an amorphous, platy morphology, which was intermingled with grains of feldspar and biotite. Based on coloration and morphology, the rock was classed into the Lizardite family (General formula: Mg₃Si₂O₅(OH)₄, Elemental Mass distribution indicated lizaride as the main serpentine component according to XRD studies and data matching against databases. From XRD data it was apparent that the German serpentine sample was of a higher quality, containing significantly more serpentine, than the sample from the Dominican Republic. After extensive trials, the German serpentine sample was chosen for further studies described in Example 3 and 4 due to enhanced settling and behavior and hardness of the resulting solidified product. In the German sample, lizardite pseudomorphously replaces olivine (http://webmineral.com/data/Lizardite.shtml) and is therefore particularly suitable for CO₂ absorbing cement compositions due to its high magnesia content. Prior to further use serpentine rock was ground to a fine powder, with a particle size smaller than 0,1 mm, using a conventional hammer mill. The resulting rock power had a white-grey appearance.

CO₂: Carbon dioxide was obtained from a local beer brewing company in Cologne, Germany. The gas was directly sourced from the beer fermentation vat and pumped (Flow rate: 12 l/min) over 100kg of a pearled molecular sieve (3A zeolite, Sigma, Germany; Kh. Mohamadbeigy , Kh.Forsat, R.Binesh (2007) EXPERIMENTAL STUDYING ON GAS DEWATERING BY MOLECULAR SIEVE ,Petroleum & Coal 49 (1), pp. 41-45) for removal of residual water s(steam). The de-watered gas was then compressed (300 bar) into 18 I pressure cylinders commonly used for scuba diving operations. The compressed gas was used for carbonation of cement compositions.

**Lignin residue production:** Wheat straw was sourced at a local farm near Bensberg, Germany. The material was ground to particles smaller than 1 cm using a combination of hammer and ball milling. Wheat straw (400g), was first subjected to hydrothermal steam pretreatment (165°C, 15min.) in a pressure vessel. The resulting slurry (m= 1578 g, V= 1643ml) was adjusted to pH 5, with two volumes of potassium phosphate buffer (200mM K-P, pH 5). The resulting slurry was hydrolysed by addition of 4% w/w cellulase enzyme (Cellic CTec, Novozymes, Denmark)/w pretreated straw and incubation at 45°C for 72h. After this incubation period, the slurry was centrifuged at 20,000g for 15min. The sugar rich supernatant was discarded, while the remaining solid residue (m= 320g) was washed twice with one volume of distilled water, centrifuged and dried in an oven at 67°C for 24h. The dried solid was further milled with a knife mill (GRINDOMIX GM 200, Retsch, Germany) to a particle size smaller than 300µm. The chemical composition of the resulting deep brown powder was analyzed according to established procedures (A. Sluiter, B. Hames, R. Ruiz, C. Scarlata, J. Sluiter, D. Templeton, and D. Crocker (2008) Determination of Structural Carbohydrates and Lignin in Biomass Laboratory Analytical Procedure, http://www.nrel.gov/biomass/pdfs/42618.pdf). The dry mass content of the solid residue was determined with an IR-balance (Mettler Toledo, Germany). According to the applied procedures the lignin rich residue consisted of 67% Lignin w/w d.s. residue, 15% Cellulose w/w d.s. residue, 6% w/w residual water and 12% w/w that could be attributed to inorganic salts. This material was used without further treatment for modification of cements.

**Degumming residue:** Raw degumming residue was sourced from a conventional biodiesel plant in northern Germany. Degumming of natural oils (soy and rapeseed mix) was carried using cyclic water washes. The degumming residue had a white and oily appearance with no defined grains. The lipid composition was determined according to (G.R. LIST, T.L. MOUNTS, and A.J. HEAKIN, (1978) Steam-Refined Soybean Oil, J.Am.Oil.Chem.Soc.. 55(2),pp. 280-284), protein content was estimated by the Kjeldahl methodology (Lynch JM, Barbano DM. (1999) Kjeldahl nitrogen analysis as a reference method for protein determination in dairy products , J. AOAC Int. , 82(6), pp. 1389-98), while the water content was estimated using an IR-Balance (Mettler-Toledo, Germany). The water content of the degumming residue was determined at 35% w/w. The main chemical components of the solid fraction were 56% w/w phospholipids, 6% protein w/w d.s. degumming residue, 23% saponified fatty acids w/w d.s. degumming residue, 4% inorganic salts w/w d.s. degumming residue. The degumming residue was used as received for fictionalization of cement compositions.

**Solid biogas digestate:** Solid biogas residues, were sourced at a local biogas fermentation unit utilizing a 50 (corn) : 50 (grass silage) % w/w feed material. The resulting solid residues obtained after the anaerobic fermentation phase are rich in cellulose. The compositional analysis was carried out as described for lignin residues, while the water content was estimated according to the Karl-Fisher methodology.

The amount of cell residue was determined using the absorbance reading at 600nm. The water content of the biogas solid fraction was estimated at 63% w/w. The main solid components were cellulose 56% w/w, 32% lignin, 7% w/w cell residues and 5% w/w inorganic salts. The biogas digestate was used as received.

### Cnidaria derived exopolysaccharides:

The gorgonian *Pseudopteragorgia americana* (Kim, K. Antimicrobial activity in gorgonian corals (Coelenterata, Octocorallia) (1994) Coral Reefs 13, pp. 5-80) was collected by scuba at Sweetings cay, Bahamas at a depth of 18m. On physical stressing the gorgonian colony secreted large amounts of exopolysaccharide protecting mucus (Jatkar AA, Brown BE, Bythell JC, Guppy R, Morris NJ, Pearson JP. (2010) Coral mucus: the properties of its constituent mucins. Biomacromolecules.11(4), pp.883-8), which was collected with a plastic syringe and placed in a sealable plastic bags. In the laboratory, the mucus was dialysed against d.d. water in a 10kDa cut off dialysis membrane at 4°C for 24h to remove excess salt. The resulting mucus yield was 423g. The chemical composition of coral exopolysaccharides is described in the literature (Coddeville B, Maes E, Ferrier-Pages C, Guerardel Y.(2011) Glycan profiling of gel forming mucus layer from the scleractinian symbiotic coral Oculina arbuscula. Biomacromolecules12(6), pp.2064-73). The resulting low ionic strength exopolysaccharide was used for further studies in MgO based cement manufacture.

**Table 1: Physical characteristics of cement compositions**

| Experiment | Additive | Mass % w/w | Air entrainment % v/v | Settling time Ratio (modified cement/plain cement) | Compressive Strength Ratio (modified cement/plain cement) |
|---|---|---|---|---|---|
| 1 | None | 0 | 2,7 | 1 | 1 |
| 2 | Degumming residue | 1,5 | 2,1 | 1,2 | 1.1 |
| 3 | Degumming residue | 2.5 | 2,8 | 2,7 | 1.3 |
| 4 | Biogas digestate | 1,5 | 3,2 | 3.1 | 1.2 |
| 5 | Biogas digestate | 3 | 4.8 | 3.2 | 1.7 |
| 6 | Lignin residue | 1 | 4,3 | 2.7 | 1.2 |
| 7 | Lignin residue | 5 | 5.7 | 6.3 | 2.4 |
| 8 | Exopolysaccharide | 7.5 | 2.3 | 4.8 | 3.8 |

### Comparative Example 1 (Plain cement composition)

Natural serpentine was activated in an oven at 750 °C for 30 min. After cooling down the serpentine was grounded to particle sizes below d⁵⁰ = 70 µm using a hammer mill.

To 500 g water, 500 g finely grounded activated serpentine was added under kneading at room temperature. The slurry was sparged (Flow: 5 l/min) with CO₂ for 20min. under pressure (1,3 bar) to initiate the carbonation process. For an equal distribution of the gas within the cementous slurry, the gas outlet was divided into four tubing outlet (diameter: 2cm) stations that were placed at equal distances in the 10l reaction vessel. After 30 min kneading time the cement compositions were casted into a casting box. Curing of the plain cement composition was carried out at room temperature. The settling time and air retention was measured using a modified procedure according established methods (EN 196/3; DIN 1164 -1168; ASTM C, 191, ASTM C185 - 08). The compressive strength was determined after 7 days using a modified procedure according ISO 4012.

### Example 2 (Biomass functionalized cement compositions)

Natural serpentine was activated in an oven at 750 °C for 30 min. After cooling down the serpentine was grounded to particle sizes below d⁵⁰ = 70 µm using a hammer mill.

To 500 g water and 0.5-10% w/w biogenic modifier (see table 1), 470 g finely grounded activated serpentine and 30g steel furnace slags (obtained from Tyssen-Krupp, Duisburg, Germany) was added under kneading at room temperature. The slurry was sparged (Flow: 5 l/min) with CO₂ under pressure (1,3 bar) for 20 min. to initiate the carbonation process. For an equal distribution of the gas within the cementous slurry, the gas outlet was divided into four tubing outlet (diameter: 2cm) stations that were placed at equal distances in the 10l reaction vessel. After 30 min kneading time the cement compositions were casted into a casting box. Curing of the modified cement composition was carried out at room temperature. The settling time and air retention was measured using a modified procedure according established methods (EN 196/3; DIN 1164 -1168; ASTM C, 191, ASTM C185 - 08). In cases where the settling time was retarded compared to the plain cement composition, 2% w/w of water free MgCl₂ (Sigma, Germany) was added as a binding accelerator. The compressive strength was determined after 7 days using a modified procedure according ISO 4012. The comparative results are indicated in table 1.

### Example 3 (Comparison of functionalized C₂ adsorbing cement and non-functionalized C0₂ adsorbing cement when CO₂ is adsorbed from ambient air only)

The same cement slurries described in example 3 were prepared, poured in square plastic casts (ice block casts). Instead of treating the slurries with compressed CO₂ as described in example 3, these cement slurries were stored openly, exposed only to ambient air/ CO₂. The settling and curing time of cement slurries were observed over time. Moisture content and CO₂ adsorption was measured using mass balances determined over 6 month time. Weight determinations of cast cement blocks was conducted on an analytical balance (Model KERN ABT 100-5M), which provided accurate weight determinations down to 1mg.

In the initial curing phase, water was primarily lost over two weeks, surface exposed storage at room temperature leading to a significant weight loss. After 2-3 days weight loss accounting for water evaporation stabilised and stopped. From 3 to 50 days a weight increase could be measured, which was due to CO₂ binding of the cement material (see Fig.3). The weight increase during this time was associated with significant hardening of the cement product. After the initial 60 day measurement weight increase due to CO₂ adsorption deceased and finally reached a plateau point, indicating CO₂ saturation of the cement material. After this time span building blocks were removed from their plastic casts and Mohs hardness was measured according to DIN (DIN 18155) standard procedures described previously (http://www.duratiles.com.tr/eng/pdf/Y%C3%BCzey-Sertligi-MOHS.pdf). While the dried/ solid product containing no biological modifiers had a Mohs hardness of about 1, it did disintegrate to a heterogeneous powder upon application of slight pressure with a finger or nail. In the absence of biological modifiers the solid product shows significant cracks in the material prior to release from the casts indicating a nonuniform curing of the material.
In contrast solid/ ligated cement products containing biological modifiers showed no cracks prior to release from their plastic casts, indicating a uniform curing and settling of the material. The resulting solid blocks could be released from their casts without breakage or cracking. On application of mechanical pressure with fingers and nails no change in the material occurred. Further increasing the mechanical pressure of the material by applying a hammer, the cement material split into large pieces but did not disintegrate into a powder. Measuring the Mohs hardness of the cement blocks showed an increasing Mohs hardness from 2 to 3 with increasing concentrations of biological modifiers. XRD data for the German rock sample, demonstrated that the sample contained 56% pure Serpentine. Correlation of XRD data provided a basis for quantitatively measuring the CO₂ adsorption of solidified material containing lignin (Table 1, sample 7) as a modifier. Since 6% Lignin is present 77 g Serpentine is left for CO₂ uptake. Calculations based on a molecular weight basis indicated that 18% w/w CO₂ uptake was reached after about 60 days. This figure is almost double the maximal theoretical CO₂ adsorption that could be achieved with Portland cement composition.

We have also tested the CO₂ adsorption capacity of a standard Portland cement mixture that is commercially available.
Comparing our CO₂ adsorption data for functionalized MgO based cement with that of conventional Portland cement products the data clearly indicate that Portland cement does not adsorb CO₂ within the measured timeframe. Therefore, MgO based cements disclosed herein have a superior CO₂ adsorption kinetics and total adsorption capacity. Hence MgO based cement compositions disclosed herein can actively contribute to elimination of anthropogenic CO₂ emissions from ambient air, without the requirement of additional technical equipment for CO₂ work up and conditioning.

### Example 4 Advantages of MgO based cement compared to Portland cement equivalents

We have tested the pH of our settled and solidified cement compositions described in example 4 (modified with crystal lignin) against a standard Portland cement mixture (Product CEM I 52,5 R, Heidelberg Cement, Germany) that is commercially available. The pH measurements were conducted by adding 5 ml of d.d.water to 35g solidified cement blocks. The adsorbed water, moisturized the cement blocks and enabled pH measurements with pH indicating paper (pH-Indikatorstäbchen pH 0 - 14 Universalindikator, Product No. 109565, Merck Chemicals, Germany) ranging from pH 0-13. The CaO based Portland cement compositions are more basic than comparable compositions based on MgO (i.e. serpentine) material mixed with biological modifiers. Generally, Portland cement compositions showed a pH of 11-13, while the MgO based cement compositions produced in Example 4 all showed pH values in the order of 8.7-9.5. Hence the MgO based cement compositions show a far more acidic pH compared to Portland cement equivalents. This feature makes them more resistant to corrosion by basic materials such as sea water having a basic pH of around 7.3-8.1. Therefore the cement applications disclosed herein are well suited for maritime building, such as harbours and wave breaker or artificial reefs for environmental reconstruction.

## Claims

1. A method for the production of cement utilising by-products generated by a biorefinery unit comprising the following steps
Step 1: Mechanical grinding of a feedstock comprising one or more CO₂ sequestering compounds;
Step 2: Heating the ground feed stock resulting from step 1 to a temperature of 200 to 1500°C, preferably 200 to 750 °C, more preferably 200 to 600 ° C.
Step 3: Functionalizing the dry plain cement resulting from step 2 by addition of one or more biological modifiers selected from the group of lignin, furfural, cellulose, phospholipids, exopolysaccharides and microbial cell residues.
Step 4: Carbonation of the material resulting from step 3 under addition of gaseous CO₂
Step 5: Drying of the mineral carbonates resulting from step 4
wherein
the energy used for step 1 and/or the heat used for step 2 is provided by the biorefinery unit or by a power plant utilizing a product provided by the biorefinery unit and
wherein the CO2 used for step 4 is provided by the biorefinery unit and/or by ambient air.

2. A method according to claim 1 **characterized in that** the one or more CO₂ sequestering compounds are selected from the group of serpentine, olivine, brucite, pyroxene and magnesiumoxide.

3. A method according to claim 1 **characterized in that** the biological modifiers are provided by the biorefinery unit.

4. A method according to claim 3 **characterized in that** the biological modifiers provided in form of at least one waste stream of the biorefinery unit.

5. A method according to any one of claims 3 to 4 **characterized in that** the biological modifiers provided in form of at least one waste stream of the biorefinery unit which is either untreated or only modified by dewatering.

6. A functionalized cement product comprising a biological modifier selected from the group of lignin, furfural, cellulose, phospholipids, exopolysaccharides and microbial cell residues or any mixture thereof, **characterized in that** it comprises SiO₂, MgCO₃, unreacted feedstock selected from the group of serpentine, olivine, brucite and pyroxene wherein the functionalized cement product is dried and ligated.

7. A functionalized cement product according to claim 6 **characterized in that** the ratio of MgCO3 to Si02 is in the range of 3:1 to 1:3.

8. A functionalized cement product according to claims 6 to 7 **characterized in that** the combined amount of Si02 and MgCO3 is 60 - 98 % w/w, preferably 75 - 96 % w/w of dry weight.

9. A functionalized cement product comprising a biological modifier selected from the group of lignin, furfural, cellulose, phospholipids, exopolysaccharides and microbial cell residues or any mixture thereof **characterized in that** it comprises SiO₂, activated magnesiumoxides, magnesiumhydroxides, magensiumaquoxides and unreacted feedstock selected from the group of serpentine, olivine, brucite and pyroxene wherein the functionalized cement product is unligated and is suitable to ligate under the addition of water and CO₂.

10. A functionalized cement product according to claims 6 to 9 **characterized in that** the unreacted feedstock is present in an amount of 0,01- 5 % w/w, preferably 0,03 - 2 % w/w of dry weight.

11. A functionalized cement product according to claims 6 to 10 **characterized in that** it comprises the one or more biological modifiers in an amount of 0,5 to 40 w/w, preferably 1 to 20 % w/w and even more preferably 1-10%w/w of dry weight.

12. A functionalized cement product according to claims 6 to 11 **characterized in that** the biological modifiers have an weight average molecular weight Mw > 600 g/mol, preferably Mw > 5000 g/mol, more preferably Mw > 10.000 g/mol.

13. A functionalized cement product according to claims 6 to 12 also comprising one or more components selected from the group of fly ash in an dry weight amount of 1-20 % w/w, aluminium slags, furnace slags, w/w sand in an dry weight amount of 1-40% w/w, natural or artificial, wood resin in an dry weight amount of 1-30% w/w, filter residues from edible oil processing, plant waxes, oil seed press cake or fractions thereof, or chemically modified celluloses.

## Patentansprüche

1. Eine Methode zur Herstellung von Zement unter Benutzung von Nebenprodukten, die aus eine Bioraffinerieeinheit entstanden sind, umfassend die folgenden Schritte
Schritt 1: Mechanisches Mahlen eines Ausgangsmaterials enthaltend eine oder mehrere CO₂ adsorbierende Komponenten,
Schritt 2: Erhitzen des gemahlenen Ausgangsmaterials aus Schritt 1 auf eine Temperatur von 200 bis 1500°C, bevorzugt 200 bis 750°C, besonders bevorzugt 200 bis 600°C,
Schritt 3: Funktionalisierung des aus Schritt 2 resultierenden trockenen, einfachen Zements durch Hinzufügen eines oder mehrerer biologischer Modifikatoren ausgewählt aus der Gruppe von Lignin, Furfural, Cellulose, Phospholipiden, Exopolysacchariden und mikrobiologischen Zellrückständen,
Schritt 4: Carbonisierung des aus Schritt 3 resultierenden Materials unter Hinzufügen von gasförmigen CO₂,
Schritt 5: Trocknen des aus Schritt 4 resultierenden mineralischen Carbonats
wobei
die Energie, die für Schritt 1 aufgewendet wird, und/oder die Hitze für Schritt 2 durch die Bioraffinerieeinheit oder ein Kraftwerk, das Produkte der Bioraffinerieeinheit nutzt, zur Verfügung gestellt wird und
wobei das CO₂ für Schritt 4 von der Bioraffinerieeinheit oder aus der Umgebungsluft zur Verfügung gestellt wird.

2. Eine Methode nach Anspruch 1 **dadurch gekennzeichnet, dass** der eine oder die mehreren CO₂ adsorbierenden Komponenten ausgewählt sind aus der Gruppe Serpentin, Olivin, Brucit, Pyroxin und Magnesiumoxid.

3. Eine Methode nach Anspruch 1 **dadurch gekennzeichnet, dass** die biologischen Modifikatoren von der Bioraffinerieeinheit zur Verfügung gestellt werden

4. Eine Methode nach Anspruch 3 **dadurch gekennzeichnet, dass** die biologischen Modifikatoren in Form eine Abfallproduktes der Bioraffinerie zur Verfügung gestellt wird.

5. Eine Methode nach einem der Ansprüche 3 oder 4 **dadurch gekennzeichnet, dass** die Modifikatoren in Form eine Abfallproduktes der Bioraffinerieeinheit entweder unverändert oder nur durch Wasser verdünnt sind.

6. Ein funktionalisiertes Zementprodukt enthaltend biologische Modifikatoren ausgewählt aus der Gruppe Lignin, Furfural, Cellulose, Phospholipide, Exopolysaccharide and microbiologische Zellrückstände oder eine Mischung davon dadurch charakterisiert, dass es SiO₂ MgCO₃ und nicht-reagiertes Ausgangmaterial ausgewählt aus der Gruppe Serpentin, Olivin, Brucit, Pyroxin enthält wobei das funktionalisierte Zementprodukt getrocknet und abgebunden ist.

7. Ein funktionalisiertes Zementprodukt nach Anspruch 6 **dadurch gekennzeichnet, dass** das Verhältnis von MgCO₃ zu SiO₂ im Bereich von 3:1 bis 1:3 liegt.

8. Ein funktionalisiertes Zementprodukt nach einem der Ansprüche 6 oder 7 **dadurch gekennzeichnet, dass** die kombinierte Menge von SiO₂ und MgCO₃ 60-98 % w/w, bevorzugt 75 - 96 % w/w, des Trockengewichts ausmacht.

9. Ein funktionalisiertes Zementprodukt enthaltend biologische Modifikatoren ausgewählt aus der Gruppe Lignin, Furfural, Cellulose, Phospholipide, Exopolysaccharide and mikrobiologische Zellrückstände oder eine Mischung davon dadurch charakterisiert, dass es SiO₂, aktivierte Magnesiumoxide, Magnesiumhydroxide, Magnesiumaquoxide und nicht-reagiertes Ausgangmaterial ausgewählt aus der Gruppe Serpentin, Olivin, Brucit, Pyroxin enthält wobei das funktionalisierte Zementprodukt nicht abgebunden ist und unter Beimischung von Wasser und CO₂ zur Abbindung geeignet ist.

10. Ein funktionalisiertes Zementprodukt nach einem der Ansprüche 6 bis 9 **dadurch gekennzeichnet, dass** nicht reagiertes Ausgangsmaterial in einer Menge von 0.01- 5 % w/w, bevorzugt 0,03 - 2 % w/w, des Trockengewichts vorhanden ist.

11. Ein funktionalisiertes Zementprodukt nach einem der Ansprüche 6 bis 10 **dadurch gekennzeichnet, dass** es einen oder mehrere biologische Modifikatoren in einer Menge von 0,5 - 40 % w/w, bevorzugt 1- 20 % w/w und besonders bevorzugt 1-10 % w/w, des Trockengewichts enthält.

12. Ein funktionalisiertes Zementprodukt nach einem der Ansprüche 6 bis 11 **dadurch gekennzeichnet, dass** die biologischen Modifikatoren ein gewichtsgemitteltes Molekulargewicht Mw > 600 g/mol, bevorzugt Mw > 5000 g/mol, besonders bevorzugt Mw > 10.000 g/mol, aufweisen.

13. Ein funktionalisiertes Zementprodukt nach einem der Ansprüche 6 bis 12 **dadurch gekennzeichnet, dass** weiterhin eine oder mehrere Komponenten enthält, ausgewählt aus der Gruppe Flugasche in einer Menge von 1- 20 % des Trockengewichts, Aluminiumschlacke, Ofenschlacke oder Sand in einer Menge von 1- 40 % des Trockengewichts, natürliche oder künstliche Holzharze in einer Menge von 1 - 30 % des Trockengewichts, Filterrückstände der Herstellung essbaren Öls, Pflanzenwachse, Ölsamenfilterkuchen oder Bestandteile davon, und chemisch modifizierte Cellulosen.

## Revendications

1. Procédé de production de ciment utilisant des sous-produits générés par une bioraffinerie comprenant les étapes suivantes
Première étape: broyage mécanique d'une matière première comprenant un ou plusieurs agents qui permettent piégeage du carbone;
Deuxième étape: Chauffage de la matière première broyée résultant de la première étape à une temperature comprise entre 200 et 1500°C, de preference entre 200 et 750°C, de manière plus préférée entre 200 et 600°C.
Troisième étape: Fonctionnalisation du ciment sec et durci résultant de la deuxième étape par l'addition d'un ou plusieurs modificateurs biologiques choisis dans le groupe de lignine, furfural, cellulose, phospholipides, exopolysaccharides, et (les) résidus cellulaires microbienne.
Quatrième étape: Carbonatation du matériel résultant de la troisième étape par l'addition du CO₂ gazeux.
Cinquième étape: Séchage des carbonates minéraux résultant de la quatrième étape.
Où
L'énergie utilisée dans la première étape et/ou la chaleur utilisée pour la deuxième étape est assurée par la bioraffinerie ou par une centrale électrique utilisant un produit fourni par la bioraffinerie et/ou par l'air ambient.

2. Procédé selon la revendication 1, **caractérisé en ce que** un ou plusieurs agents séquestrant de CO₂ sont choisis parmi le groupe de serpentine, olivine, brucite, pyroxène et l'oxyde de magnésium.

3. Procédé selon la revendication 1, **caractérisé en ce que** les modificateurs biologiques sont fournis par la bioraffinerie.

4. Procédé selon la revendication 3, **caractérisé en ce que** les modificateurs biologiques sont fournis sous la forme d'au moins un flux de déchets provenant de la bioraffinerie.

5. Procédé selon l'une quelconque des revendications 3 à 4, **caractérisé en ce que** les modificateurs biologiques sont fournis sous la forme d'au moins un flux de déchets provenant de la bioraffinerie lequel est non-traité ou modifié uniquement par déshydratation.

6. Un produit de ciment fonctionnalisé comprenant un modificateur biologique choisis dans le groupe de lignine, furfural, cellulose, phospholipides, exopolysaccharides, et des résidus cellulaires microbienne ou tout cobinaison de celles-ci, dans lequel sont compris SiO₂, MgCO₃, matière première non-réagi choisis parmi le groupe de serpentine, olivine, brucite, pyroxene où le produit de ciment fonctionnalisé est séché et ligaturé.

7. Un produit de ciment fonctionnalisé selon la revendication 6, dans lequel le rapport de MgCO₃ au SiO₂ est compris dans l'intervalle allant de 3:1 à 1:3.

8. Un produit de ciment fonctionnalisé selon les revendications 6 à 7, dans lequel le montant combiné de SiO₂ et MgCO₃ est 60 - 98 % p/p, de preference 75 - 96 % p/p en poids sec.

9. Un produit de ciment fonctionnalisé comprenant un modificateur biologique choisis dans le groupe de lignine, furfural, cellulose, phospholipides, exopolysaccharides, et des résidus cellulaires microbienne ou tout cobinaison de celles-ci, dans lequel sont compris Si02, oxydes de magnésium activés, hydroxydes de magnesium, aquoxydes de magnesium et matière première non-réagi choisis parmi le groupe de serpentine, olivine, brucite, pyroxene, où le produit de ciment fonctionnalisé est dissocié et est apte à se liguer sous l'addition d'eau et de CO₂.

10. Un produit de ciment fonctionnalisé selon les revendications 6 à 9, dans lequel la matière première non-réagi est présente en une quantité de 0.01 - 5 % p/p, de preference 0.03 - 2 % p/p en poids sec.

11. Un produit de ciment fonctionnalisé selon les revendications 6 à 10, dans lequel sont compris un ou plusieurs modificateurs biologiques en une quantité entre 0.5 - 40 % p/p, de preference 1- 20 % p/p, de manière plus préférée 1 - 10 % p/p en poids sec.

12. Un produit de ciment fonctionnalisé selon les revendications 6 à 11, dans lequel les modificateurs biologiques ont une moyenne en poids du poids moléculaire Mw > 600 g/mol, de preference Mw > 5000 g/mol, de manière plus préférée Mw > 10000 g/mol.

13. Un produit de ciment fonctionnalisé selon les revendications 6 à 12, comprenant également un ou plusieurs composants choisis parmi le groupe de cendres volantes en une quantité de poids sec entre 1 - 20 % p/p, de scories en aluminium, de scorie de fourneaux, de p/p du sable en une quantité de poids sec entre 1 - 40 % p/p, de résine bois naturel ou artificiel en une quantité de poids sec entre 1 - 30 % p/p, de traitement de résidus de filtrage d'huile comestible, des cires végétales, de la pâte de grains oléagineuses ou leurs fractions, ou de cellulose chimiquement modifiée.
